# EUROPEAN PATENT APPLICATION

(11) **EP 3 073 482 A1**
(43) Date of publication of application: **28.09.2016**
(21) Application number: 16153020.9
(22) Date of filing: 27.01.2016
(51) Int. Cl.: G09G 5/00

(54) **DISPLAY APPARATUS AND DISPLAY METHOD THEREOF**

(30) Priority: 26.03.2015 KR 20150042435
(71) Applicant: Samsung Electronics Co., Ltd., Gyeonggi-do 16677 (KR)
(72) Inventor: KIM, Seok-hyun, Gyeonggi-do (KR); CHO, Bong-hyun, Gyeonggi-do (KR)
(74) Representative: Taor, Simon Edward William

(57) **Abstract**

A display apparatus and a display method thereof are provided. The display apparatus and the display method is capable of generating a size-changed image according to an original image to be displayed and utilize at least one portion of the size-changed image to fill up areas in which the original image is not displayed.

## Description

Apparatuses and methods consistent with exemplary embodiments relate to a display apparatus and a display method thereof, and more particularly, to a display apparatus and a display method thereof capable of performing image processing on a white space area in which an image is not displayed.

### Description of the Related Art

Generally, if a size of an image is smaller than a size of a display area or an aspect ratio of the image is different from that of the display area, a white space area in which the image is not displayed appears.

The white space area is generally filled up by a black color. However, if multiple images are provided in a grip type user interface (UI), these black areas may interrupt the viewer when viewing these images..

Therefore, to fill the white space area with an image, the related art uses a method for adjusting the aspect ratio of an image to fit the aspect ratio of the display area, a method for enlarging an image and then cutting out a portion of the enlarged image, etc.

However, the existing methods may cause a distortion or a loss of the image. Therefore, a method for filling a white space area without damaging an image is required.

Exemplary embodiments of the present disclosure overcome the above disadvantages and other disadvantages not described above. Also, the exemplary embodiments of the present disclosure are not required to overcome the disadvantages described above, and an exemplary embodiment of the present disclosure need not overcome any of the problems described above.

According to an aspect of an exemplary embodiment, a display apparatus and a display method thereof capable of displaying a size-changed image in a white space area in which an original image is not displayed are provided.

According to an aspect of an exemplary embodiment, a display apparatus is provided. The display apparatus includes: a display configured to provide a display area having a preset aspect ratio; a storage configured to store at least one image; and a processor configured to generate a size-changed image in which a size of at least a portion of the image is changed and displaying at least a portion of the size-changed image in a white space area other than an area in which the image is displayed, in an event in which an aspect ratio of the image is different from the preset aspect ratio.

The processor may generate the size-changed image by changing the size of the image into a size of the display area and display at least one portion of the size-changed image corresponding to the white space area in the white space area.

The processor may display the entire size-changed image in the display area and then display the image to overlap the size-changed image.

The processor may display the image in the display area and display the size-changed image generated by enlarging at least a portion of the image adjacent to the white space area in the white space area.

The processor may determine the portion of the image adjacent to the white space area based on the size of the white space area.

The processor may apply an average value of color and brightness of the portion of the image to the size-changed image.

The processor may perform blurring processing on the size-changed image and display at least a portion of the blurring-processed size-changed image in the white space area.

The display may provide a plurality of display areas having at least one aspect ratio, and the processor may at least one size-changed image in which a corresponding image provided to a display area of the plurality display areas is changed and processes the white space area of the display area based on the generated size-changed images, in response to at least one image having an aspect ratio different from an aspect ratio of a corresponding display area.

The plurality of display areas may be provided from a grid type UI screen.

According to another aspect of the present invention, a display method of a display apparatus providing a display area having a preset aspect ratio is disclosed. The display method includes: generating a size-changed image in which a size of at least a portion of an image displayed in the display area is changed, in an event in which an aspect ratio of the image is different from the preset aspect ratio; and displaying at least a portion of the size-changed image in a white space area other than an area in which the image is displayed.

In the generating of the size change image, the size-changed image may be generated by changing the size of the image to a size of the display area, and in the displaying, at least one portion of the size-changed image corresponding to the white space area may be displayed in the white space area.

In the displaying, the size-changed image may be displayed in the display area and then the image is displayed to overlap the size-changed image.

In the displaying, the image may be displayed in the display area and the size-changed image generated by enlarging at least a portion of the image adjacent to the white space area is displayed in the white space area.

In the displaying, the portion of the image adjacent to the white space area may be determined based on the size of the white space area.

In the displaying, an average value of color and brightness of the portion of the image may be applied to the size-changed image.

In the displaying, blurring processing may be performed on the size-changed image and at least a portion of the blurring-processed size-changed image may be displayed in the white space area.

In the generating of the size-changed image, when at least one image provided to a corresponding display area of a plurality of display areas has an aspect ratio different from an aspect ratio of a corresponding display area, at least one size-changed image in which a size of the image provided to of the corresponding display area is changed is generated, and in the displaying, white space areas provided from the corresponding display area is processed based on the generated size-changed images.

The plurality of display areas may be provided from a grid type UI screen.

According to an aspect of an exemplary embodiment, a display apparatus is provided. The display apparatus includes a display configured to provide a display area having a preset aspect ratio and a processor configured to control the display to display received images. The received images may be stored in a storage. If a received image has an aspect ratio of the image that is different from the preset aspect ratio of the display, the processor is arranged to generate a size-changed image in which a size of at least a portion of the image is changed. The processor is then arranged to control the display to display at least a portion of the size-changed image in a white space area other than an area in which the image is displayed on the display.

As described above, according to the exemplary embodiments of the present disclosure, it is possible to enhance the user's visual and aesthetic sense of stability without distorting the image by filling the white space area in which the image is not displayed in the display area with the size-changed image.

Additional and/or other aspects and advantages of the present disclosure will be set forth in part in the description which follows and, in part, will be obvious from the description, or may be learned by practice of the invention.

The above and/or other aspects will be more apparent by describing certain exemplary embodiments with reference to the accompanying drawings, in which:
FIG. 1 is a block diagram of a display apparatus according to an exemplary embodiment;
FIGS. 2A and 2B are block diagrams illustrating a detailed configuration of the display apparatus illustrated in FIG. 1;
FIG. 3 is a diagram for describing a method for displaying at least a portion of a size-changed image in a white space area according to an exemplary embodiment;
FIG. 4 is a diagram for describing a method for displaying an image on a size-changed image according to an exemplary embodiment;
FIG. 5 is a diagram for describing a method for displaying at least one portion of a size-changed image in the white space area according to an exemplary embodiment;
FIG. 6 is a diagram for describing a method for displaying a size-changed image generated by enlarging partial images of an original image adjacent to a white space area in the white space area according to an exemplary embodiment;
FIG. 7 is a diagram for describing a method for displaying a portion of blurring-processed size-changed image in a white space area according to an exemplary embodiment;
FIGS. 8 and 9 are diagrams for describing a method for displaying at least a portion of a size-changed image in a white space area in a display having a plurality of display areas according to an exemplary embodiment; and
FIG. 10 is a flow chart for describing a display method according to an exemplary embodiment.

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope of the present disclosure. Also, well-known functions or constructions are not described in detail because they would obscure the disclosure with unnecessary detail.

The terms "first," "second," etc. may be used to describe diverse components, but the components are not limited by the terms. The terms are only used to distinguish one component from another component.

The terms used in the present application are only used to describe the exemplary embodiments, but are not intended to limit the scope of the disclosure. In addition, the singular expression does not limit the present disclosure to have singular component or step. Instead, the present disclosure may comprise multiple components or steps even if described in singular expression. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" implemented with specific hardware, and may be implemented with at least one processor.

Hereinafter, the present disclosure will be described in detail with reference to the accompanying drawings.

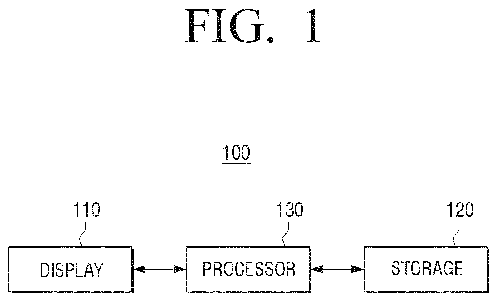

FIG. 1 is a block diagram illustrating a configuration of a display apparatus according to an exemplary embodiment. A display apparatus 100 includes a display 110, a storage 120, and a processor 130.

The display 110 may output various contents. Here, the contents may include an image, a moving image, a text, music, an application, a graphic user interface (GUI), or the like.

Meanwhile, the display 110 may be implemented as various types of displays such as a liquid crystal display, an organic light-emitting diode, a liquid crystal on silicon (LCoS), and digital light processing (DLP).

Further, the display 110 may provide a display area having a preset aspect ratio. The display 110 may display various contents in the display area having the preset aspect ratio and display a white space area in which the content is not displayed as a black area, or the like.

The storage 120 stores various data such as an operation system (O/S) software program for driving the display apparatus 100, various kinds of multimedia contents, various kinds of applications, various data, such as various kinds of contents input or set while the applications are executed.

In particular, the storage 120 may store information of an image, information on the display area, or the like. In detail, the storage 120 may store information of a size and an aspect ratio of the image, a size and an aspect ratio of the display area, a size of the white space area, or the like.

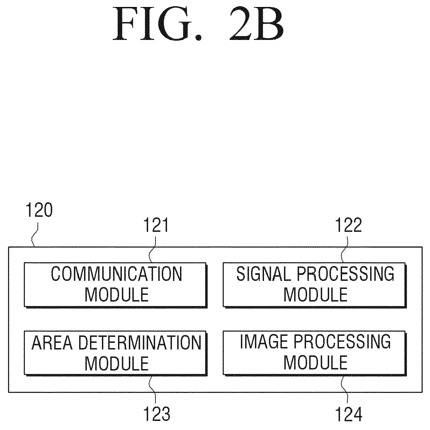

In addition, various software programs stored in the storage 120 will be described with reference to FIG. 2B.

The processor 130 controls an overall operation of the display apparatus 100.

The processor 130 determines whether the aspect ratio of the image displayed in the display area is different from that of the display area and generates a size-changed image in response to an image having an aspect ratio different from that of the display area. Here, the size-changed image represents that a portion of the image or the entire image is enlarged or adjusted.

Next, the processor 130 may use the size-changed image to process the white space area in which the image is not displayed. In detail, the processor 130 may display some portions of the size-changed image in which the size of the image is changed into a size of the display area in the white space area. In this case, the processor 130 may display the size-changed image in the display area and then display the image to overlap the size-changed image or display the original image in the display area and display at least one portion of the size-changed image in the white space area.

Further, the processor 130 may display the image in the display area and then display the size-changed image generated by enlarging at least one portion of the image adjacent to the white space area in the white space area. In this case, the processor 130 may determine the portion adjacent to the white space area based on the size of the white space area. That is, if the size of the white space area is determined, the processor 130 may display a portion having the same size as the size of the white space area in the white space area or enlarge a portion having a size smaller than that of the white space area and display the enlarged portion in the white space area.

The processor 130 may calculate an average value of color and brightness of the portion adjacent to the white space area to change color and brightness of the size-changed image into the average value of the color and brightness of the areas adjacent to the white space area. In addition, the processor 130 may extract a change pattern of the color and brightness from a central area of the portion to an outside area thereof and change the color and brightness of the size-changed image to correspond to the extracted change pattern.

Further, the processor 130 may perform blurring processing on the size-changed image. Here, the blurring processing means defocusing an image to make the image blurred. The processor 130 may display a portion of the blurring-processed size-changed image in the white space area.

In detail, the processor 130 may change the size of the image to generate the size-changed image and then perform the blurring processing thereon, display an original image on the blurring-processed size-changed image to overlap the size-changed image such that a portion of the blurring-processed size-changed image is displayed in the white space area. Further, the processor 130 may display an image and then cut a portion corresponding to the white space area from the blurring-processed size-changed image and display the portion of the size-changed image in the white space area.

Further, in a case that the display has a plurality of display areas, the processor 130 may determine at least one display area in which the aspect ratio of a corresponding image is different from that of the display area. And then, the processor 130 may generate the size-changed image according to the image (for example, changing the size of the image to generate the size-changed image) and process the white space areas of the display area based on the size change area.

As described above, according to exemplary embodiments e, when the image having an aspect ratio different from that of the display area is displayed in the display area, a portion of the size-changed image may be displayed in the white space area to enhance user's visual and aesthetic sense of stability without distorting the image.

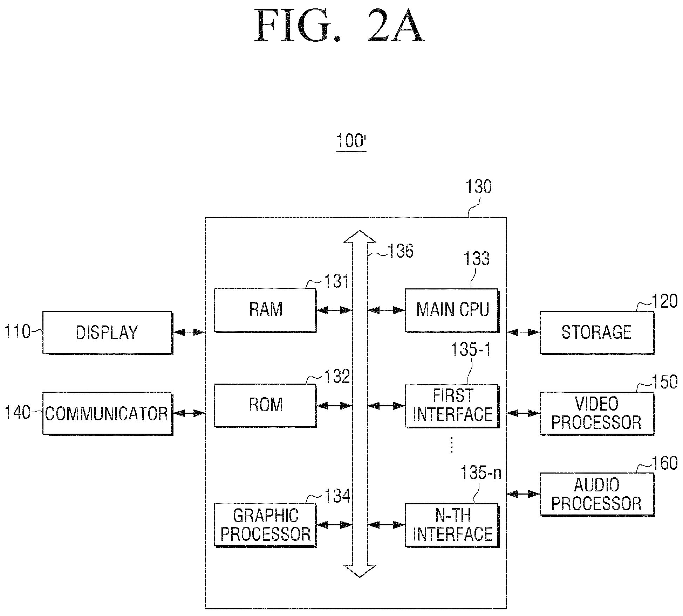

FIGS. 2A and 2B are block diagrams illustrating a detailed configuration of the display apparatus illustrated in FIG. 1.

FIG. 2A is a block diagram illustrating a detailed configuration of the display apparatus illustrated in FIG. 1. Referring to FIG. 2A, a display apparatus 100' is configured to include the display 110, the storage 120, and the processor 130, a communicator 140, a video processor 150, and an audio processor 160. Some components in FIG. 2A have been illustrated in the above disclosure and thus further illustration is omitted in the following disclosure.

The processor 130 controls a general operation of the display apparatus 100'.

In detail, the processor 130 includes a RAM 131, a ROM 132, a main CPU 133, a graphic processor 134, first to n-th interfaces 135-1 to 135-n, and a bus 136.

The RAM 131, the ROM 132, the main CPU 133, the graphic processor 134, the first to n-th interfaces 135-1 to 135-n, and the like may be connected to each other via the bus 136.

The first to n-th interfaces 135-1 to 135-n are connected to the foregoing various components. One of the interfaces may be a network interface which is connected to the external devices through a network.

The main CPU 133 accesses the storage 120 to perform a booting operation by executing the operation system (O/S) stored in the storage 120. Further, the main CPU 133 executes various operations using various programs, contents, data, and the like which are stored in the storage 120.

The ROM 132 stores a set of commands for system booting, etc. When an activation command is input to supply power, the main CPU 133 copies an OIS stored in the storage 120 to the RAM 131 according to the command stored in the ROM 132 and executes the O/S to boot the system. When the booting operation is completed, the main CPU 133 copies various application programs stored in the storage 120 to the RAM 131 and executes the application programs copied to the RAM 131 to perform various operations.

The graphic processor 134 uses an operator and a renderer to generate a screen including various objects such as an icon, an image, and a text, for example, a screen including a pointing object. The operator operates attribute values, such as coordinate values, forms, sizes, and colors which represent each object according to a layout of the screen, based on the received control command. The renderer creates screens of various layouts including the objects based on the attribute values which are operated by the operator. The screen generated by the renderer is displayed in a user interface area of the display 110.

Meanwhile, the foregoing operation of the processor 130 may be executed by the programs which are stored in the storage 120 as illustrated in FIG. 2B.

The storage 120 stores various data such as an operation system (O/S) software program for driving the display apparatus 100', and various kinds of multimedia contents.

In particular, as illustrated in FIG. 2B, the storage 120 may store programs, such as a communication program 121, a signal processing program 122, an area determination program 123, an image processing program 124, etc., which are required to provide the size-changed image to the white space area according to the exemplary embodiment of the present disclosure.

The processor 130 may execute the communication program 121 to receive a signal from external apparatuses and execute the signal processing program 122 to process the received signal.

Further, the processor 130 may execute the area determination program 123 to determine the area in which the image is displayed and the area in which the image is not displayed from the display area. In addition, the processor 130 may execute the area determination program 123 to determine a portion of the image adjacent to the white space area.

Further, the processor 130 may execute the image processing program 124 to change the size of the image, thereby generating the size-changed images and display a portion of the size-changed image in the white space area.

For example, the processor 130 may change the image to have a size of the display area and cut a portion from the image according to the display area to generate the size-changed image.

In addition, the display apparatus 100' may include the video processor 150 performing processing on video data, the audio processor 160 performing processing on audio data and may further include a speaker outputting various kinds of alarms or voice messages, or the like as well as various audio data processed by the audio processor 160, a camera photographing a still image or a moving image according to a user control, a microphone receiving a user voice or other sounds to be converted into audio data, etc.

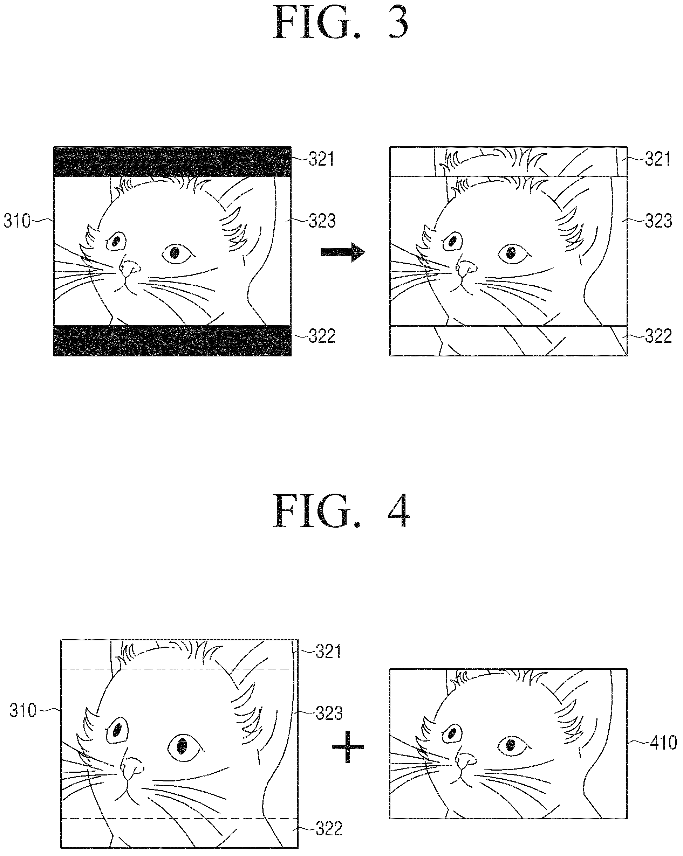

FIG. 3 is a diagram for describing a method for displaying at least a portion of the size-changed image in the white space area according to an exemplary embodiment.

As illustrated in FIG. 3, when an aspect ratio of a display area 310 is different from an aspect ratio of an image, the image is displayed in the area 323 but white space areas 321 and 322 may appear. Here, the white space areas 321 and 322 may be generally represented by a black area. Hence, the white space areas 321 and 322 are blank.

When the white space areas 321 and 322 are filled up with the size-changed image in which the size of the image is changed, the aesthetic sense of stability may be provided to the user without distorting the original image.

The size-changed images which are displayed in the white space areas 321 and 322 may be generated by enlarging or reducing a portion of the image or the entire image. For example, if the size-changed image is generated by enlarging the entire image (in which the size of the image may be changed to fit the size of the display area 310), the entire size-changed image is displayed in the display area 310 and then the original image may be displayed in the display area 323 to overlap the size-changed image. Or, the original image may be displayed in the display area 323 and then two portions of the size-changed image may be displayed in the white space areas 321 and 322. A detailed method for generating a size-changed image and a method for displaying a size-changed image in the white space areas 321 and 322 will be described with reference to FIGS. 4 to 6.

FIG. 4 is a diagram for describing a method for displaying an image on a size-changed image according to an exemplary embodiment.

Referring to FIG. 4, the processor 130 changes the size of the image to fit the size of the display area 310 to generate the size-changed image. In this case, the size-changed image may be displayed in the display 310 including the display area 323 and the white space areas 321 and 322.

Then, the processor 130 may display the original image in the area 323 to overlap the size-changed image. That is, because the original image 410 covers the size change image, a portion of the size-changed image that is not covered by the original image may be displayed in the white space areas 321 and 322.

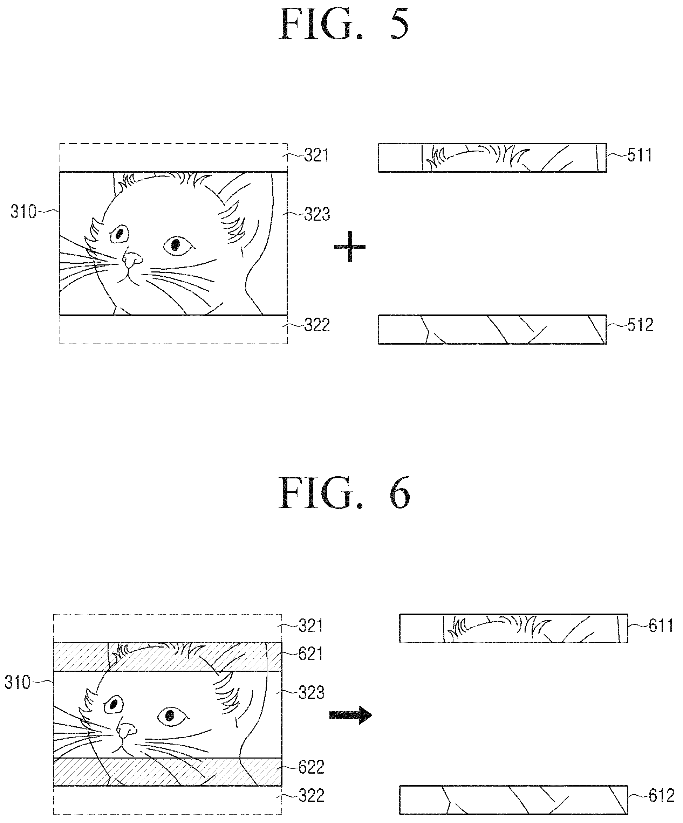

FIG. 5 is a diagram for describing a method for displaying at least one portion of a size-changed image in the white space area according to an exemplary embodiment.

Referring to FIG. 5, the processor 130 changes the size of the image into the size of the display area 310 to generate the size-changed image and then cut a portion of the sized-changed image corresponding to the white space areas 321 and 322.

That is, the processor 130 may display the original image in the display area 310 and then display images 511 and 512, which are the aforementioned portion of the size-changed image generated by cutting the size- changed image according to the white space areas 321 and 322.

FIG. 6 is a diagram for describing a method for displaying a size change image generated by enlarging partial images of an original image adjacent to a white space area in the white space area according to an exemplary embodiment.

Referring to FIG. 6, the processor 130 may change the size of the partial images 621 and 622 of the original image adjacent to the white space area to generate size-changed images 611 and 612. For example, the processor 130 may generate the size change images 611 and 612 by enlarging partial images 621 and 622 adjacent to the white space areas 321 and 322 and display the size-changed images 611 and 612 in the white space areas 321 and 322.

Further, the processor 130 may calculate an average value of color and brightness of the partial images 621 and 622 and 322 to change the color and brightness of the size-changed image into the average value of the color and brightness of the areas 621 and 622. In addition, the processor 130 may extract a change pattern of the color and brightness from a central area of the partial images 621 and 622 to an outside area thereof and change the color and brightness of the size-changed image according to the extracted change pattern.

When the size-changed images 611 and 612 are generated by enlarging the partial images 621 and 622, the image may seem to be continued and therefore the image may be viewed as if it is complete and displayed in the whole display area 310. Therefore, a more aesthetically and visually stabilized display screen may be provided to the user.

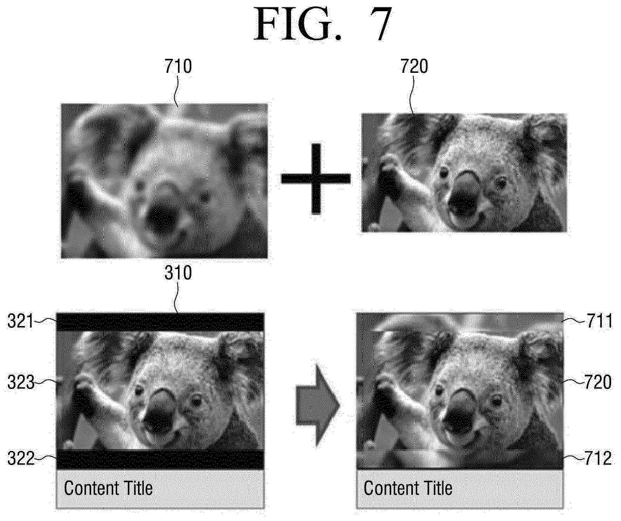

FIG. 7 is a diagram for describing a method for displaying a portion of blurring-processed size-changed image in a white space area according to an exemplary embodiment.

Referring to FIG. 7, the processor 130 may perform the blurring processing on the size-changed image and display the blurring-processed sizechanged image in the white space areas 321 and 322. In this case, the processor 130 may change the size of the image to fit the size of the display area 310 to generate the size-changed image and then perform the blurring processing on the size-changed image to generate a blurring-processed size-changed image 710. Further, the processor 130 may first perform the blurring processing on the original image and then change the size of the blurring-processed image to generate the blurring-processed size-changed image 710. Next, the processor 130 may display the original image 720 in the display area 323 to overlap the blurring-processed size change image 710.

Or, the processor 130 may cut a portion of the blurring-processed size-changed image 710 corresponding to the white space areas 321 and 322 from the blurring-processed size-changed image 710 and then display the portion in the white space areas 321 and 322.

That is, the processor 130 may display the blurring-processed size-changed image 710 in the display area 310 and then display the original image 720 to cover the size-changed image 710 or display the original image 720 and then display a portion of the blurring-processed size-changed image 710 in the white space areas 321 and 322.

As a result, the blurring-processed size-changed image 710 is displayed in the white space areas 321 and 322, and therefore the user may be given the more enhanced aesthetic sense of stability than the case in which the size change image not going through the blurring processing is displayed in the white space areas 321 and 322.

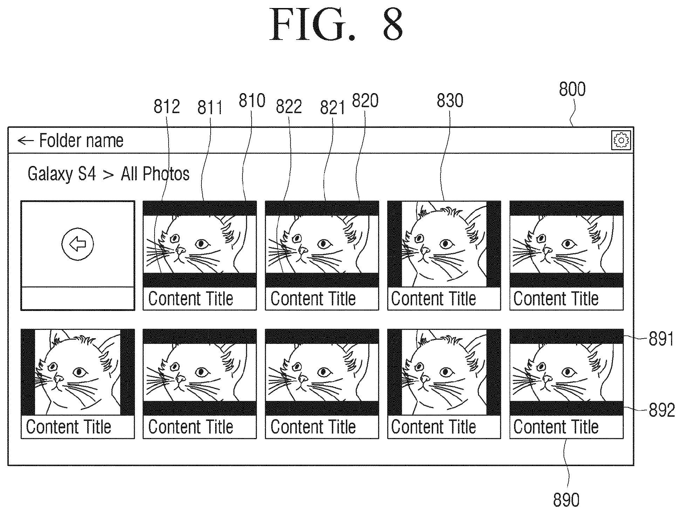

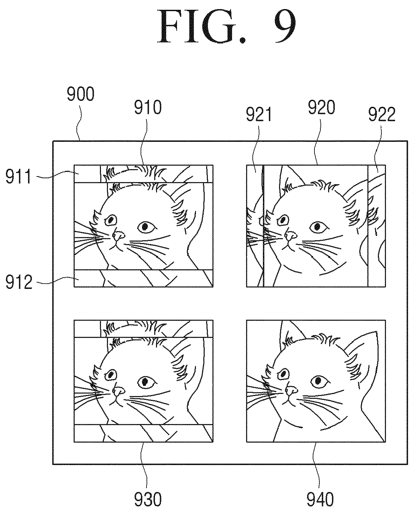

FIGS. 8 and 9 are diagrams for describing a method for displaying at least a portion of a size-changed image in a white space area of a display having a plurality of display areas according to an exemplary embodiment.

FIG. 8 is a diagram illustrating an example in which a mobile apparatus displays an image according to an exemplary embodiment.

Referring to FIG. 8, to display a plurality of images on one screen, the display apparatus 100 may provide a plurality of display areas 810, 820, 830,...,890. The plurality of display areas 810, 820, 830,...,890 may each display an image. For example, the plurality of display areas 810, 820, 830,...,890 may each display an image having an aspect ratio different from that of a corresponding display area. In this case, white space areas 811, 8i2, 821, 822,...,891, 892 may appear in each of the display areas 810, 820, 830,...,890.

FIG. 9 is a diagram illustrating a detailed example of displaying the size-changed image in the white space area in a display having the plurality of display areas illustrated in FIG. 8.

For example, the image having the aspect ratio different from that of the display area may be displayed in a first display area 910. In this case, the processor 130 may display some portions of the size-changed image in white space areas 911 and 912. In detail, the processor 130 may display an original image to overlap the size-changed image of which the size is changed into the size of the first display area 910 or display the original image and then display one portion of the size-changed image in the white space areas 911 and 912.

In another example, white space areas 921 and 922 may be at the left and right of the second display area 920. In this case, the processor 130 may display an original image in the display area 920 to overlap the size-changed image displayed in the entire display or cut a portion corresponding to the white space areas 921 and 922 from the size change image and then display the portion in the white source areas 921 and 922 in addition to the original image.

Similarly, the processor 130 may display a blurring processed size-changed image in the white space areas 911, 912, 921, 922,.... In detail, the processor 130 may display the blurring-processed size change image in each of the display areas 910, 920, 930, and 940 and then display the original image or display the original image in each of the display areas 910, 920, 930, and 940 and then display one area of the blurring-processed sizechanged image in the white space areas 911, 912, 921, 922,...

As such, the display apparatus 100 may display one portion of the size-changed image or the blurring-processed size-changed image in the white space areas to prevent the plurality of display areas 910, 920, 930, and 940 from interrupting the viewer, thereby providing images having a better aesthetical effect on the user interface (UI).

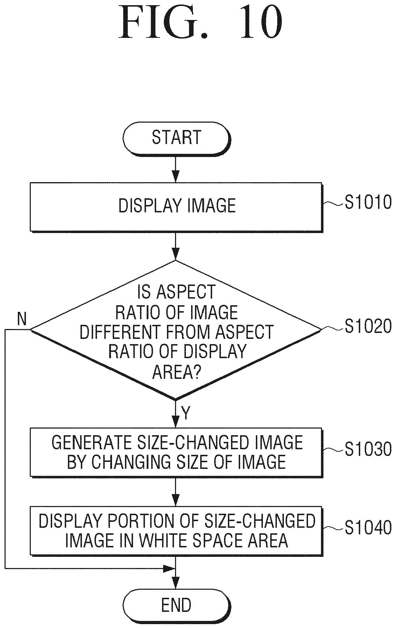

FIG. 10 is a flow chart for describing a display method according to an exemplary embodiment.

According to the display method of the display apparatus illustrated in FIG. 10, first, the original image is displayed in the display area (S1010). Here, the original image may be an image having an aspect ratio, such as 4 : 3 and 16: 9.

Next, it is determined whether the aspect ratio of the original image displayed in the display area is different from that of the display area (S1020).

In the step S1020, if it is determined that the aspect ratio of the displayed image is different from that of the display area (S1020: Y), the size of the original image is changed to generate the size-changed image (S1030). Next, a portion of the size-changed image is displayed in the white space area (S1040).

Further, in the step S1020, if it is determined that the ratio of the displayed image is not different from that of the display area (S1020: N), the size-changed image is not generated and the original image is displayed.

Further, in the steps S1030 and S1040, the size of the image may be changed into the size which may fill the display area to generate the size-changed image and display at least one portion of the size-changed image corresponding to the white space area in the white space area.

Further, in the step S1040, the size-changed image may be displayed in the display area and then the original image may be displayed to overlap the size-changed image.

Further, in the step S1040, the image may be displayed in the display area and at least one portion of the size-changed images corresponding to the white space area may be displayed in the white space area other than the display area in which the image is displayed.

Further, in the step S1040, the image may be displayed in the display area and the size-changed image generated by enlarging the partial images of the original image adjacent to the white space area may be displayed in the white space area.

Further, in the step S1040, the portion of the original image adjacent to the white space area may be determined based on the size of the white space area.

In addition, in the step S1040, the size-changed image may be processed through the blurring processing and at least a portion of the blurring-processed size-changed image may be displayed in the white space area.

Further, in the steps S1030 and S1040, when at least one original image provided to each of the plurality of display areas having at least one aspect ratio is different from the aspect ratio of the corresponding display area, at least one size-changed image may be generated and the white space areas provided from each of the plurality of display areas may be processed based on each of the generated size-changed images.

As described above, embodiments of the invention can provide a display apparatus, comprising: a display configured to provide a display area having a preset aspect ratio; and a processor configured to generate a size-changed image in which a size of at least a portion of an image to be displayed is changed and to control the display to display at least a portion of the size-changed image in a white space area other than an area in which the image is displayed, if an aspect ratio of the image is different from the preset aspect ratio.

As described above, according to exemplary embodiments, it is possible to enhance the user's visual and aesthetic effect without distorting the image by filling up the white space area in which the image is not displayed with the size-changed image.

Meanwhile, as described above, the methods according to exemplary embodiments may be implemented by the upgrade of the software for the existing display apparatus.

Further, a non-transitory computer readable medium in which a program sequentially performing the display method according to the present disclosure is stored may be provided.

For example, if the event in which the image having the aspect ratio different from that of the display area is provided to the display area, the non-transitory computer readable medium in which the program executing generating the size-changed image in which the size of at least a portion of the image displayed in the display area is changed and displaying at least a portion of the size-changed image in the white space area other than the area in which the image is displayed on the screen is stored may be provided.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

Although exemplary embodiments of the present invention have been shown and described hereinabove, the present invention is not limited to specific exemplary embodiments described above, but may be various modified by those skilled in the art to which the present invention pertains without departing from the scope of the invention as disclosed in the accompanying claims. In addition, such modifications should also be understood to fall within the scope of the present invention.

## Claims

1. A display apparatus, comprising:
a display configured to provide a display area having a preset aspect ratio;
a storage configured to store at least one image; and
a processor configured to generate a size-changed image in which a size of at least a portion of the image is changed and to display at least a portion of the size-changed image in a white space area other than an area in which the image is displayed, if an aspect ratio of the image is different from the preset aspect ratio.

2. The display apparatus as claimed in claim 1, wherein the processor is arranged to generate the size-changed image by changing the size of the image into a size of the display area and to display at least one portion of the size-changed image corresponding to the white space area in the white space area.

3. The display apparatus as claimed in claim 2, wherein the processor is arranged to display the entire size-changed image in the display area and then to display the image to overlap the size-changed image.

4. The display apparatus as claimed in any one of claims 1 to 3, wherein the processor is arranged to display the image in the display area and to display the size-changed image generated by enlarging at least a portion of the image adjacent to the white space area in the white space area.

5. The display apparatus as claimed in claim 4, wherein the processor is arranged to determine the portion of the image adjacent to the white space area based on the size of the white space area.

6. The display apparatus as claimed in claim 5, wherein the processor is arranged to apply an average value of color and brightness of the portion of the image to the size-changed image.

7. The display apparatus as claimed in any one of claims 1 to 6, wherein the processor is arranged to perform blurring processing on the size-changed image and to displays at least a portion of the blurring-processed size-changed image in the white space area.

8. The display apparatus as claimed in any one of claims 1 to 7, wherein the display is arranged to provide a plurality of display areas having at least one aspect ratio, and
the processor is arranged to generate at least one size-changed image in which a corresponding image provided to a display area of the plurality display areas is changed and to process the white space area of the display area based on the generated size-changed images, in response to at least one image having an aspect ratio different from an aspect ratio of a corresponding display area.

9. The display apparatus as claimed in claim 8, wherein the plurality of display areas are provided from a grid type UI screen.

10. A display method of a display apparatus providing a display area having a preset aspect ratio, comprising:
generating a size-changed image in which a size of at least a portion of an image displayed in the display area is changed, if an aspect ratio of the image is different from the preset aspect ratio; and
displaying at least a portion of the size-changed image in a white space area other than an area in which the image is displayed.

11. The display method as claimed in claim 10, wherein in the generating of the size-changed image, the size-changed image is generated by changing the size of the image to a size of the display area, and
in the displaying, at least one portion of the size-changed image corresponding to the white space area is displayed in the white space area.

12. The display method as claimed in claim 11, wherein in the displaying, the size-changed image is displayed in the display area and then the image is displayed to overlap the size-changed image.

13. The display method as claimed in any one of claims 10 to 12, wherein in the displaying, the image is displayed in the display area and the size-changed image generated by enlarging at least a portion of the image adjacent to the white space area is displayed in the white space area.

14. The display method as claimed in claim 13, wherein in the displaying, the portion of the image adjacent to the white space area is determined based on the size of the white space area.

15. The display method as claimed in claim 14, wherein in the displaying, an average value of color and brightness of the portion of the image is applied to the size-changed image.
